# EUROPEAN PATENT SPECIFICATION

(11) **EP 4 001 064 B1**
(45) Date of publication and mention of the grant of the patent: **11.09.2024**
(21) Application number: 21209776.0
(22) Date of filing: 23.11.2021
(51) Int. Cl.: B62D 25/08, B62D 33/06

(54) **A MOTOR VEHICLE**
KRAFTFAHRZEUG
VÉHICULE À MOTEUR

(30) Priority: 24.11.2020 NL 2026968
(43) Date of publication of application: 25.05.2022
(73) Proprietor: DAF Trucks N.V., 5643 TW Eindhoven (NL)
(72) Inventor: SINTENIE, Sjoerd Jacco, 5643 TW Eindhoven (NL); VAN DEN BEUCKEN, Gerardus Theodorus Aldegonda, 5643 TW Eindhoven (NL); KLEES, Frans, 5643 TW Eindhoven (NL)
(74) Representative: V.O.

(56) References cited:
- EP-B1- 2 708 448
- DE-A1- 2 709 518
- JP-A- H10 230 776
- US-A1- 2016 159 211

## Description

The invention relates to a motor vehicle, in particular a heavy goods vehicle, comprising a front grille and a driver cabin provided with a front windscreen, the front grille being attached to the driver cabin, the front grille and front windscreen both facing forwards in the vehicle's normal direction of movement, the front grille being positioned below and at a distance in front of the front windscreen as seen in the vehicle's normal direction of movement, thereby defining a front gap between the front grille and the front windscreen, the driver cabin further comprising:
- a cabin side section provided with a door hingeably mounted to the driver cabin;
- a cabin front corner section on a side of the front grille, the cabin front corner section extending from the front grille to the door;
- a cover assembly positioned between the front grille and the front windscreen for covering the front gap.

Such a motor vehicle is for example known from EP2708448B1. In this known motor vehicle the cover assembly comprises a cover element which is provided on its upper edge region in the vertical axis direction of the vehicle with a bend directed backwards in the direction of the front windscreen. The bend extends essentially over the entire length of the cover element and can be hooked in and positioned on an associated suspension and positioning web attached to the driver cabin. The suspension and positioning web is in the form of several spring strips extending upwards in the direction of the vertical axis of the motor vehicle over a lower edge region of the front windscreen, which spring strips define a receiving space for the bend of the cover element. On the bend of the cover element a seal is attached for sealingly engaging the front windscreen. The bend of the cover element is hung or positioned in the receiving space defined by the spring strips and then pressed down so that the spring strips press the seal and thus the cover element against the front windscreen with a defined preload. A further seal is provided on the lower edge area of the cover element opposite the bend via which further seal the cover element engages a back surface of the front grille. It has appeared that after a prolonged period of time of use of the motor vehicle the spring characteristics of the spring strips can deteriorate as a result of which the load with which the seal attached to the bend is pressed against the front windscreen can decrease. The function of the cover element to prevent water and dirt to enter below the cover element can thus be deteriorated. In addition, in particular with motor vehicles of which the front grille is movably attached to the driver cabin to be able to access the space behind the front grille for maintenance, it has appeared that the forces exerted on the further seal and the cover element itself during repeatedly moving the front grille also can deteriorate the function of the further seal and the cover element. It is thus possible that after a prolonged period of use time a gap can form between the seal attached to the bend and the front windscreen and/or a gap between the further seal and the front grille. Such gaps adversely affect the aerodynamic properties of the motor vehicle, amongst other things leading to a worse fuel economy. In the worst case it could even be possible that after a prolonged period of time the cover element can loosen from spring strips and fall out of the receiving space.

It is thus an object of the invention to provide a motor vehicle with a cover assembly that can prevent entry of water and dirt in the space below the cover assembly over a prolonged period of time. It is a further object of the invention to provide a motor vehicle with a cover assembly that does not negatively influence the aerodynamic properties of the motor vehicle.

According to the invention at least one of the objects is obtained by providing a motor vehicle, in particular a heavy goods vehicle, comprising a front grille and a driver cabin provided with a front windscreen, the front grille being attached to the driver cabin, the front grille and front windscreen both facing forwards in the vehicle's normal direction of movement, the front grille being positioned below and at a distance in front of the front windscreen as seen in the vehicle's normal direction of movement, thereby defining a front gap between the front grille and the front windscreen, the driver cabin further comprising:
- a cabin side section provided with a door hingeably mounted to the driver cabin;
- a cabin front corner section on a side of the front grille, the cabin front corner section extending from the front grille to the door;
- a cover assembly positioned between the front grille and the front windscreen for covering the front gap; characterized in that the driver cabin comprises a firewall positioned in vertical direction below the front windscreen and positioned at a distance behind the front grille as seen in the vehicle's normal direction of movement; and in that the cover assembly comprises a V-shaped cover element having a first cover element leg and a second cover element leg integrally attached to the first cover element leg, the first cover element leg having a free first cover element leg end mounted to the firewall, the V-shaped cover element having a central section in which the first cover element leg extends from the firewall in a substantially horizontal direction towards a first cover element leg front grille end arranged near the front grille, and in which central section the second cover element leg extends rearwards in the vehicle's normal direction of movement from the front grille in a direction upwards towards the front windscreen, the second cover element leg and the first cover element leg enclosing an angle of at most 50°. By mounting the V-shaped cover element to the firewall via the free first cover element leg end it is possible to mount the cover assembly to the firewall in a manner which is mechanically stable over a prolonged period of time, for example using screws or bolts. In addition, by using a V-shaped cover element the V-shaped cover element is very rigid as a result the V-shaped cover element bending back at the first cover element leg front grille end arranged near the front grille in a direction to the front windscreen. This bend provides additional rigidity to the V-shaped cover element as a result of which it can maintain its proper function over a prolonged period of time and as a result of which the relative positioning of the V-shaped cover element with regard to the front windscreen and the front grille remains constant over a prolonged period of time. As a result of the second cover element leg and the first cover element leg enclosing an angle of at most 50° the air flows from the front grille of the motor vehicle via the cabin front corner section and the cabin side section at most little disturbed thereby reducing aerodynamic drag which is beneficial for fuel economy.

In an embodiment of a motor vehicle according to the invention the angle has a value between 25° and 45°. As a result of the second cover element leg and the first cover element leg enclosing an angle having a value between 25° and 45° it can be realized that no vortices are induced in the air flow from the front grille of the motor vehicle via the cabin front corner section and the cabin side section thereby further reducing aerodynamic drag which is in particular beneficial for fuel economy.

In another embodiment of a motor vehicle according to the invention the cover assembly comprises a first seal extending between the first cover element leg front grille end to the front grille, the first seal engaging the front grille, and wherein the cover assembly comprises a second seal extending between a free end of the second cover element leg and the front windscreen, the second seal engaging the front windscreen. As a result of the additional rigidity of the V-shaped cover element the first seal and the second seal can provide a satisfactory seal over a prolonged period of time and thereby can efficiently prevent entry of water and dirt in the space below the cover assembly over a prolonged period of time. In addition, the first seal and the second seal prevent air present within the space between the firewall and the front grille from flowing out of this space and thereby disturb the air flows thereby further reducing aerodynamic drag which is beneficial for fuel economy.

In a further embodiment of a motor vehicle according to the invention the front grille is rotatably attached to the driver cabin on a front grille hinge axis, the front grille hinge axis extending horizontally and transverse to the vehicle's normal direction of movement, wherein the front grille hinge axis is arranged near an upper end of the front grille. It has appeared that the present invention provides a satisfactory prevention of entry of water and dirt in the space below the cover assembly over a prolonged period of time even in case the front grille is rotatably attached to the driver cabin. In addition, it has appeared that even after rotating the front grille a relatively large number of times the cover assembly still performs satisfactory and does not negatively influence the aerodynamic properties of the motor vehicle.

In a still further embodiment of a motor vehicle according to the invention the second cover element leg has an upper surface, the upper surface of the second cover element leg has a first surface area positioned adjacent the front grille and a second surface area positioned adjacent the front windscreen, the second surface area being raised relative to the first surface area, wherein a transition from the first surface area to the second surface area is formed by a wedge shaped step. Such an upper surface of the second cover element leg with the wedge shaped step transition appears to be very beneficial for reducing aerodynamic drag.

In an embodiment of a motor vehicle according to the invention the front windscreen comprises a curved windscreen side section, the curved windscreen side section extending above the cabin front corner section and at a distance from the cabin front corner section thereby defining a corner gap, wherein the V-shaped cover element comprises a curved side section covering the corner gap, and wherein at the curved side section of the V-shaped cover element the first cover element leg has a first cover element leg cabin front corner section end arranged near the cabin front corner section, wherein at the curved side section of the V-shaped cover element the first seal extends between the first cover element leg cabin front corner section end and the cabin front corner section, the first seal engaging the cabin front corner section, wherein at the curved side section of the V-shaped cover element the second cover element leg extends from the cabin front corner section in a direction upwards towards the curved windscreen side section, and wherein at the curved side section of the V-shaped cover element the second seal extends between a free end of the second cover element leg and the curved windscreen side section, the second seal engaging the curved windscreen side section. In particular with vehicles having curved windscreen sections high velocity flows are present around the curved section. By providing the V-shaped cover element with such a curved side section it is prevented that these high velocity flows are disturbed as a result of which aerodynamic drag is reduced.

In an embodiment of a motor vehicle according to the invention the V-shaped cover element has an intermediate section between the curved side section of the V-shaped cover element and the central section of the V-shaped cover element, wherein in the intermediate section of the V-shaped cover element the wedge shaped step between the first surface area and the second surface area is positioned closer to the front windscreen than to the front grille, and wherein in both the curved side section of the V-shaped cover element and the central section of the V-shaped cover element the wedge shaped step between the first surface area and the second surface area is positioned closer to the cabin front corner section and the front grille, respectively, than to the front windscreen. In particular with motor vehicles in which the front grille, the cabin front corner section, the cabin side section and the front windscreen are configured such that the air flowing from the front grille of the motor vehicle via the cabin front corner section to the cabin side section results in an adjacent air flow at the cabin side section, a V-shaped cover element constructed in this manner ensures that the adjacent air flow is not disturbed. This is beneficial for the fuel economy of the motor vehicle.

The invention will be further explained with reference to the Figures, in which a non-limiting exemplary embodiment of a vehicle according to the invention is shown:
Fig. 1 schematically shows an embodiment of a motor vehicle according to the invention comprising a front grille and a driver cabin provided with a front windscreen, the driver cabin having a cabin side section provided with a door;
Fig. 2 schematically shows the embodiment of the motor vehicle as shown in Fig. 1 with the front grille and the door in an open position;
Fig. 3 schematically shows a portion of the embodiment of the motor vehicle as shown in Figure 1 and 2 indicating the curved windscreen side section of the front windscreen and the curved side section of the V-shaped cover element;
Fig. 4 schematically shows the embodiment of Fig. 3 in which the wedge shaped step transition of the upper surface of the second cover element leg of the V-shaped cover element is indicated;
Fig. 5 schematically in cross-section and perspective shows the V-shaped cover element of the embodiment as shown in Fig. 4 along the line V-V; and
Fig. 6 schematically in cross-section and perspective shows the V-shaped cover element of the embodiment as shown in Fig. 4 along the line VI-VI.

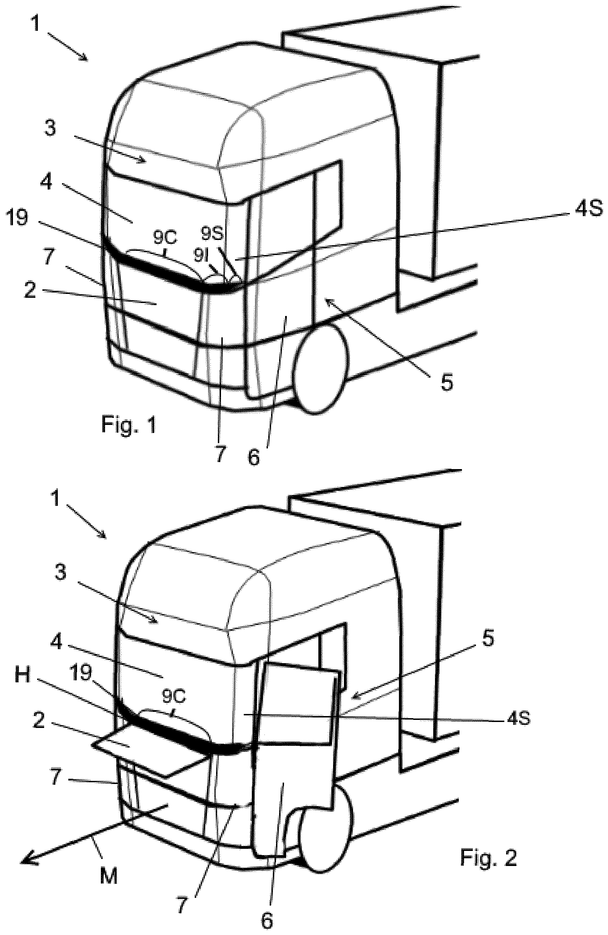

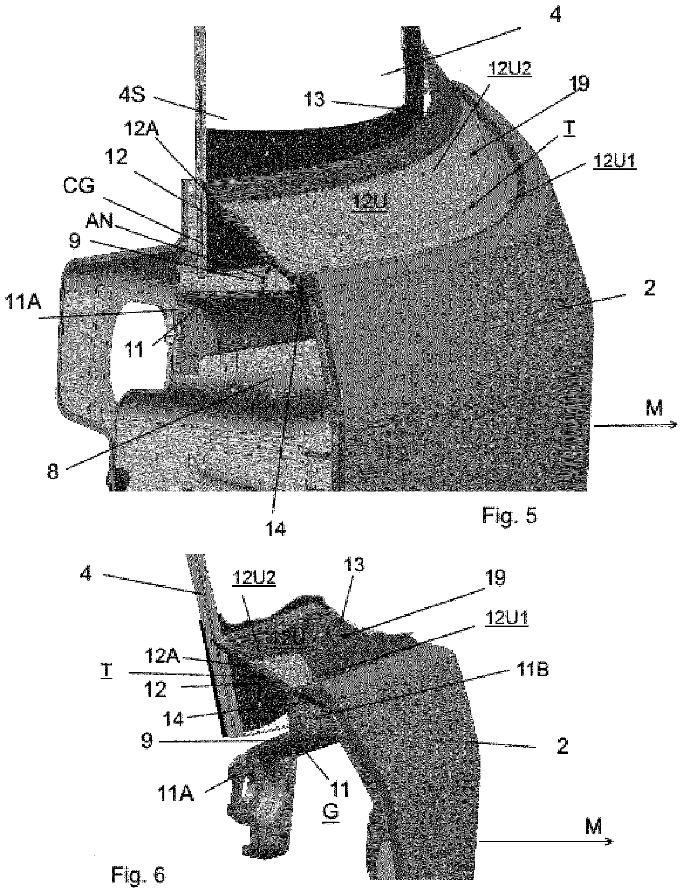

In Fig. 1 an example of an embodiment of a motor vehicle according to the invention, in the shown embodiment a heavy goods vehicle 1 is schematically shown. The vehicle 1 comprising a front grille 2 and a driver cabin 3 provided with a front windscreen 4. In the shown embodiment the front grille 2 is rotatably attached to the driver cabin 3 on a front grille hinge axis H (see Fig. 2) which extends horizontally and transverse to the vehicle's normal direction of movement M. The front grille hinge axis H is arranged near an upper end of the front grille 2 so that the front grille 2 can be pivoted upwards from a closed position as indicated in Fig. 1 to an open position as indicated in Fig. 2 for accessing the space behind the front grille 2. The front grille 2 and the front windscreen 4 both face forwards in the vehicle's normal direction of movement M. The front grille 2 is positioned below and at a distance in front of the front windscreen 4 as seen in the vehicle's normal direction of movement M, thereby defining a front gap G (see Fig. 6) between the front grille 2 and the front windscreen 4.

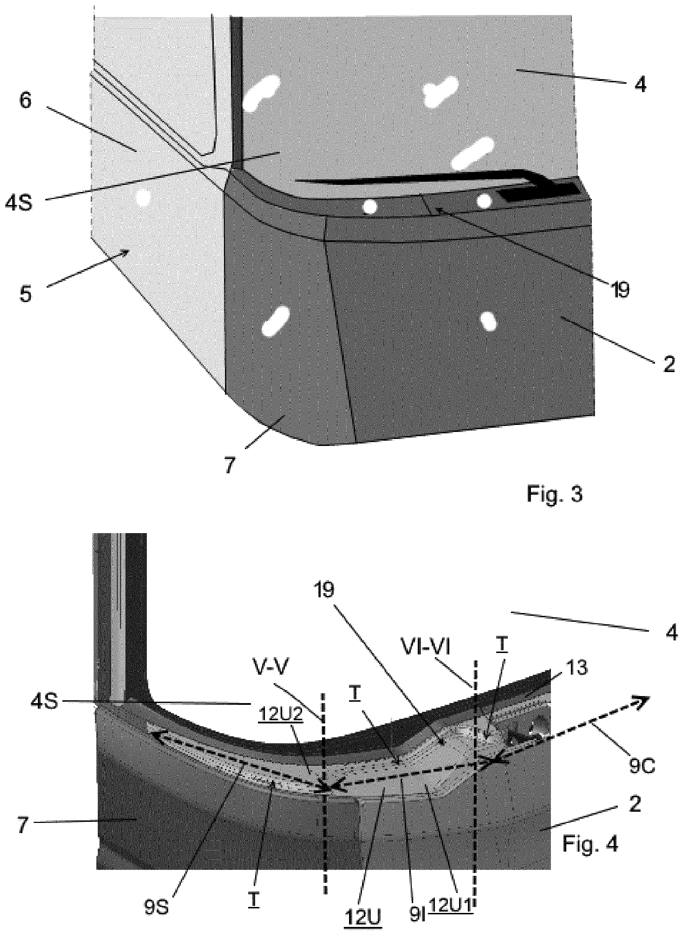

As shown in Figures 1 and 2 the driver cabin 3 comprises a cabin side section 5 provided with a door 6 hingeably mounted to the driver cabin 3. In Figures 1 and 2 only one cabin side section 5 is visible but it will be clear that the cabin 3 also comprises a cabin side section 5 at the opposite side of the cabin 3 as indicated in Fig. 3.

The driver cabin 3 further comprises cabin front corner sections 7 on each side of the front grille 2, which cabin front corner sections 7 extend from the front grille 2 to the door 6. In the embodiment shown in the Figures the front windscreen 4 has curved windscreen side sections 4S which extend above the cabin front corner sections 7 and at a distance from the cabin front corner sections 7 thereby defining a corner gap CG as indicated in Fig. 5.

The driver cabin 3 comprises a firewall 8 (see Fig. 5) positioned in vertical direction below the front windscreen 4 and positioned at a distance behind the front grille 2 as seen in the vehicle's normal direction of movement M. According to the invention a cover assembly 19 is positioned between the front grille 2 and the front windscreen 4 for covering the front gap G and the corner gap CG. The cover assembly 19 comprises a V-shaped cover element 9 having a first cover element leg 11 and a second cover element leg 12 integrally attached to the first cover element leg 11. The first cover element leg 11 has a free first cover element leg end 11A mounted to the firewall 8.

The V-shaped cover element 9 has a central section 9C (see Figs. 1, 2 and 4) in which the first cover element leg 11 extends from the firewall 8 in a substantially horizontal direction towards a first cover element leg front grille end 11B (Fig. 6) arranged near the front grille 2. In this central section 9C the second cover element leg 12 extends rearwards in the vehicle's normal direction of movement M from the front grille 2 in a direction upwards towards the front windscreen 4. As indicated in Fig. 5 the second cover element leg 12 and the first cover element leg 11 enclose an angle AN preferably having a value between 25° and 45°, which angle AN is at most 50°.

The cover assembly 19 comprises a first seal 14 extending between the first cover element leg front grille end 11B to the front grille 2. The first seal 14 engages the front grille 2. A second seal 13 extends between a free end 12A of the second cover element leg 12 and the front windscreen 4 and engages the front windscreen 4.

As shown in Figures 1 and 4 the V-shaped cover element 9 comprises a curved side section 9S covering the corner gap CG. At the curved side section 9S of the V-shaped cover element 9 the first cover element leg has a first cover element leg cabin front corner section end arranged near the cabin front corner section 7. At the curved side section 9S of the V-shaped cover element 9 the first seal 14 extends between the first cover element leg cabin front corner section end and the cabin front corner section 7 and engages the cabin front corner section 7. At the curved side section 9S of the V-shaped cover element 9 the second cover element leg extends from the cabin front corner section 7 in a direction upwards towards the curved windscreen side section 4S. At the curved side section 9S of the V-shaped cover element 9 the second seal 13 extends between a free end of the second cover element leg and the curved windscreen side section 4S and engages the curved windscreen side section 4S.

As indicated in Figures 4 to 6 the second cover element leg 12 has an upper surface 12U. This upper surface 12U of the second cover element leg 12 has a first surface area 12U1 positioned adjacent the front grille 2 and a second surface area 12U2 positioned adjacent the front windscreen 4. The second surface area 12U2 is raised relative to the first surface area 12U1 and the transition from the first surface area 12U1 to the second surface area 12U2 is formed by a wedge shaped step T.

As shown in Figures 1 and 4 the V-shaped cover element 9 has an intermediate section 9I between the curved side section 9S of the V-shaped cover element 9 and the central section 9C of the V-shaped cover element 9. In the intermediate section 9I of the V-shaped cover element 9 the wedge shaped step T between the first surface area 12U1 and the second surface area 12U2 is positioned closer to the front windscreen 4 than to the front grille 2, while in both the curved side section 9S of the V-shaped cover element 9 and the central section 9C of the V-shaped cover element 9 the wedge shaped step T between the first surface area 12U1 and the second surface area 12U2 is positioned closer to the cabin front corner section 7 and front grille 2, respectively than to the windscreen 4.

In particular with motor vehicles 1 in which the front grille 2, the cabin front corner section 7, the cabin side section 5 and the front windscreen 4 are configured such that the air flowing from the front grille 2 of the motor vehicle 1 via the cabin front corner section 7 to the cabin side section 5 results in an adjacent air flow at the cabin side section 5, a cover assembly 19 with a V-shaped cover element 9 constructed in the manner described above ensures that the adjacent air flow is not disturbed, which is beneficial for the fuel economy of the motor vehicle 1. In addition, the V-shaped cover element 9 with its first seal 14 and second seal 13 satisfactory prevents entry of water and dirt in the space below the cover assembly 19 over a prolonged period of time even in case the front grille 2 is rotatably attached to the driver cabin 3.

## Claims

1. A motor vehicle (1), in particular a heavy goods vehicle, comprising a front grille (2) and a driver cabin (3) provided with a front windscreen (4), the front grille (2) being attached to the driver cabin (3), the front grille (2) and front windscreen (4) both facing forwards in the vehicle's normal direction of movement (M), the front grille (2) being positioned below and at a distance in front of the front windscreen (4) as seen in the vehicle's normal direction of movement (M), thereby defining a front gap (G) between the front grille (2) and the front windscreen (4), the driver cabin (3) further comprising:
- a cabin side section (5) provided with a door (6) hingeably mounted to the driver cabin (3);
- a cabin front corner section (7) on a side of the front grille (2), the cabin front corner section (7) extending from the front grille (2) to the door (6);
- a cover assembly (19) positioned between the front grille (2) and the front windscreen (4) for covering the front gap (G); **characterized in that** the driver cabin (3) comprises a firewall (8) positioned in vertical direction below the front windscreen (4) and positioned at a distance behind the front grille (2) as seen in the vehicle's normal direction of movement (M); and **in that** the cover assembly (19) comprises a V-shaped cover element (9) having a first cover element leg (11) and a second cover element leg (12) integrally attached to the first cover element leg (11), the first cover element leg (11) having a free first cover element leg end (11A) mounted to the firewall (8), the V-shaped cover element (9) having a central section (9C) in which the first cover element leg (11) extends from the firewall (8) in a substantially horizontal direction towards a first cover element leg front grille end (11B) arranged near the front grille (2), and in which central section (9C) the second cover element leg (12) extends rearwards in the vehicle's normal direction of movement (M) from the front grille (2) in a direction upwards towards the front windscreen (4), the second cover element leg (12) and the first cover element leg (11) enclosing an angle (AN) of at most 50°.

2. A motor vehicle (1) according to claim 1, wherein the angle (AN) has a value between 25° and 45°.

3. A motor vehicle (1) according to claim 1 or 2, wherein the cover assembly (19) comprises a first seal (14) extending between the first cover element leg front grille end (11B) to the front grille (2), the first seal (14) engaging the front grille (2), and wherein the cover assembly (19) comprises a second seal (13) extending between a free end of the second cover element leg (12) and the front windscreen (4), the second seal (13) engaging the front windscreen (4).

4. A motor vehicle (1) according to any one of the preceding claims, wherein the front grille (2) is rotatably attached to the driver cabin (3) on a front grille hinge axis (H), the front grille hinge axis (H) extending horizontally and transverse to the vehicle's normal direction of movement (M), wherein the front grille hinge axis (H) is arranged near an upper end of the front grille (2).

5. A motor vehicle (1) according to any one of the preceding claims, wherein the second cover element leg (12) has an upper surface (12U), the upper surface (12U) of the second cover element leg (12) has a first surface area (12U1) positioned adjacent the front grille (2) and a second surface area (12U2) positioned adjacent the front windscreen (4), the second surface area (12U2) being raised relative to the first surface area (12U1), wherein a transition from the first surface area (12U1) to the second surface area (12U2) is formed by a wedge shaped step (T).

6. A motor vehicle (1) according to claim 3 or to any one of claims 4 or 5 when dependent on claim 3, wherein the front windscreen (4) comprises a curved windscreen side section (4S), the curved windscreen side section (4S) extending above the cabin front corner section (7) and at a distance from the cabin front corner section (7) thereby defining a corner gap (CG), wherein the V-shaped cover element (9) comprises a curved side section (9S) covering the corner gap (CG), and wherein at the curved side section (9S) of the V-shaped cover element (9) the first cover element leg (11) has a first cover element leg cabin front corner section end arranged near the cabin front corner section (7), wherein at the curved side section (9S) of the V-shaped cover element (9) the first seal (14) extends between the first cover element leg cabin front corner section end and the cabin front corner section (7), the first seal (14) engaging the cabin front corner section (7), wherein at the curved side section (9S) of the V-shaped cover element (9) the second cover element leg (12) extends from the cabin front corner section (7) in a direction upwards towards the curved windscreen side section (4S), and wherein at the curved side section (9S) of the V-shaped cover element (9) the second seal (13) extends between a free end of the second cover element leg (12) and the curved windscreen side section (4S), the second seal (13) engaging the curved windscreen side section (4S).

7. A motor vehicle (1) according to claim 5 or to claim 6 when dependent on claim 5, wherein the V-shaped cover element (9) has an intermediate section between the curved side section (9S) of the V-shaped cover element (9) and the central section (9C) of the V-shaped cover element (9), wherein in the intermediate section of the V-shaped cover element (9) the wedge shaped step (T) between the first surface area (12U1) and the second surface area (12U2) is positioned closer to the front windscreen (4) than to the front grille (2), and wherein in both the curved side section (9S) of the V-shaped cover element (9) and the central section (9C) of the V-shaped cover element (9) the wedge shaped step (T) between the first surface area (12U1) and the second surface area (12U2) is positioned closer to the cabin front corner section (7) and the front grille (2), respectively, than to the front windscreen (4).

## Patentansprüche

1. Kraftfahrzeug (1), insbesondere ein Lastkraftwagen, umfassend einen Frontgrill (2) und eine Fahrerkabine (3), die mit einer Frontscheibe (4) versehen ist, wobei der Frontgrill (2) an der Fahrerkabine (3) befestigt ist, wobei der Frontgrill (2) und die Frontscheibe (4) beide in der normalen Bewegungsrichtung (M) des Fahrzeugs nach vorne gerichtet sind, wobei der Frontgrill (2) unterhalb und in einem Abstand vor der Frontscheibe (4), gesehen in der normalen Bewegungsrichtung (M) des Fahrzeugs, angeordnet ist, wodurch ein vorderer Spalt (G) zwischen dem Frontgrill (2) und der Frontscheibe (4) definiert wird, wobei die Fahrerkabine (3) ferner umfasst:
- einen Kabinenseitenabschnitt (5), der mit einer Tür (6) versehen ist, die schwenkbar an der Fahrerkabine (3) angebracht ist;
- einen Kabinenfronteckabschnitt (7) auf einer Seite des Frontgrills (2), wobei sich der Kabinenfronteckabschnitt (7) von dem Frontgrill (2) bis zu der Tür (6) erstreckt;
- eine Abdeckbaugruppe (19), die zwischen dem Frontgrill (2) und der Frontscheibe (4) angeordnet ist, um den vorderen Spalt (G) abzudecken;
**dadurch gekennzeichnet, dass** die Fahrerkabine (3) eine Spritzwand (8) umfasst, die in vertikaler Richtung unterhalb der Frontscheibe (4) und in einem Abstand hinter dem Frontgrill (2), gesehen in der normalen Bewegungsrichtung (M) des Fahrzeugs, angeordnet ist; und **dass** die Abdeckbaugruppe (19) ein V-förmiges Abdeckelement (9) umfasst, das einen ersten Abdeckelementschenkel (11) und einen zweiten Abdeckelementschenkel (12) aufweist, der einstückig an dem ersten Abdeckelementschenkel (11) befestigt ist, der erste Abdeckelementschenkel (11) ein freies erstes Abdeckelementschenkelende (11A) aufweist, das an der Spritzwand (8) angebracht ist, wobei das V-förmige Abdeckelement (9) einen mittleren Abschnitt (9C) aufweist, in dem sich der erste Abdeckelementschenkel (11) von der Spritzwand (8) in einer im Wesentlichen horizontalen Richtung zu einem ersten Abdeckelementschenkel-Frontgrillende (11B) erstreckt, das in der Nähe des Frontgrills (2) angeordnet ist, und in welchem mittleren Abschnitt (9C) sich der zweite Abdeckelementschenkel (12) in der normalen Bewegungsrichtung (M) des Fahrzeugs vom Frontgrill (2) nach hinten in Richtung nach oben zur Frontscheibe (4) erstreckt, wobei der zweite Abdeckelementschenkel (12) und der erste Abdeckelementschenkel (11) einen Winkel (AN) von höchstens 50° einschließen.

2. Kraftfahrzeug (1) nach Anspruch 1, wobei der Winkel (AN) einen Wert zwischen 25° und 45° hat.

3. Kraftfahrzeug (1) nach Anspruch 1 oder 2, wobei die Abdeckbaugruppe (19) eine erste Dichtung (14) umfasst, die sich zwischen dem ersten Abdeckelementschenkel-Frontgrillende (11B) und dem Frontgrill (2) erstreckt, wobei die erste Dichtung (14) am Frontgrill (2) anliegt, und wobei die Abdeckbaugruppe (19) eine zweite Dichtung (13) umfasst, die sich zwischen einem freien Ende des zweiten Abdeckelementschenkels (12) und der Frontscheibe (4) erstreckt, wobei die zweite Dichtung (13) an der Frontscheibe (4) anliegt.

4. Kraftfahrzeug (1) nach einem der vorhergehenden Ansprüche, wobei der Frontgrill (2) an einer Frontgrill-Scharnierachse (H) drehbar an der Fahrerkabine (3) befestigt ist, wobei die Frontgrill-Scharnierachse (H) horizontal und quer zur normalen Bewegungsrichtung (M) des Fahrzeugs verläuft, wobei die Frontgrill-Scharnierachse (H) nahe einem oberen Ende des Frontgrills (2) angeordnet ist.

5. Kraftfahrzeug (1) nach einem der vorhergehenden Ansprüche, wobei der zweite Abdeckelementschenkel (12) eine obere Fläche (12U) aufweist, wobei die obere Fläche (12U) des zweiten Abdeckelementschenkels (12) einen ersten Flächenbereich (12U1), der an den Frontgrill (2) angrenzt, und einen zweiten Flächenbereich (12U2), der an die Frontscheibe (4) angrenzt, aufweist, wobei der zweite Flächenbereich (12U2) gegenüber dem ersten Flächenbereich (12U1) erhöht ist, wobei ein Übergang von dem ersten Flächenbereich (12U1) zu dem zweiten Flächenbereich (12U2) durch eine keilförmige Stufe (T) gebildet ist.

6. Kraftfahrzeug (1) nach Anspruch 3 oder nach einem der Ansprüche 4 oder 5, wenn dieser von Anspruch 3 abhängt, wobei die Frontscheibe (4) einen gekrümmten Windschutzscheibenseitenabschnitt (4S) umfasst, wobei sich der gekrümmte Windschutzscheibenseitenabschnitt (4S) oberhalb des Kabinenfronteckabschnitts (7) und in einem Abstand von dem Kabinenfronteckabschnitt (7) erstreckt, wodurch ein Eckspalt (CG) definiert wird, wobei das V-förmige Abdeckelement (9) einen gekrümmten Seitenabschnitt (9S) umfasst, der den Eckspalt (CG) abdeckt, und wobei an dem gekrümmten Seitenabschnitt (9S) des V-förmigen Abdeckelements (9) der erste Abdeckelementschenkel (11) ein erstes Abdeckelementschenkel-Kabinenfronteckabschnittende aufweist, das in der Nähe des Kabinenfronteckabschnitts (7) angeordnet ist, wobei sich am gekrümmten Seitenabschnitt (9S) des V-förmigen Abdeckelements (9) die erste Dichtung (14) zwischen dem ersten Abdeckelementschenkel-Kabinenfronteckabschnittende und dem Kabinenfronteckabschnitt (7) erstreckt, wobei die erste Dichtung (14) an dem Kabinenfronteckabschnitt (7) anliegt, wobei an dem gekrümmten Seitenabschnitt (9S) des V-förmigen Abdeckelements (9) der zweite Abdeckelementschenkel (12) von dem Kabinenfronteckabschnitt (7) in Richtung nach oben zum gekrümmten Windschutzscheibenseitenabschnitt (4S) verläuft, und wobei sich an dem gekrümmten Seitenabschnitt (9S) des V-förmigen Abdeckelements (9) die zweite Dichtung (13) zwischen einem freien Ende des zweiten Abdeckelementschenkels (12) und dem gekrümmten Windschutzscheibenseitenabschnitt (4S) erstreckt, wobei die zweite Dichtung (13) an dem gekrümmten Windschutzscheibenseitenabschnitt (4S) anliegt.

7. Kraftfahrzeug (1) nach Anspruch 5 oder nach Anspruch 6, wenn dieser von Anspruch 5 abhängt, wobei das V-förmige Abdeckelement (9) einen Zwischenabschnitt zwischen dem gekrümmten Seitenabschnitt (9S) des V-förmigen Abdeckelements (9) und dem mittleren Abschnitt (9C) des V-förmigen Abdeckelements (9) aufweist, wobei im Zwischenabschnitt des V-förmigen Abdeckelements (9) die keilförmige Stufe (T) zwischen dem ersten Flächenbereich (12U1) und dem zweiten Flächenbereich (12U2) näher an der Frontscheibe (4) als am Frontgrill (2) angeordnet ist, und wobei sowohl im gekrümmten Seitenabschnitt (9S) des V-förmigen Abdeckelements (9) als auch im mittleren Abschnitt (9C) des V-förmigen Abdeckelements (9) die keilförmige Stufe (T) zwischen dem ersten Flächenbereich (12U1) und dem zweiten Flächenbereich (12U2) näher am Kabinenfronteckabschnitt (7) beziehungsweise am Frontgrill (2) positioniert ist als an der Frontscheibe (4).

## Revendications

1. Véhicule à moteur (1), en particulier véhicule poids lourd, comprenant une calandre avant (2) et une cabine de conducteur (3) pourvue d'un pare-brise avant (4), la calandre avant (2) étant fixée à la cabine de conducteur (3), la calandre avant (2) et le pare-brise avant (4) étant tous deux orientés vers l'avant dans la direction de déplacement normale (M) du véhicule, la calandre avant (2) étant positionnée en dessous et à une certaine distance devant le pare-brise avant (4), vue dans la direction de déplacement normale (M) du véhicule, en définissant ainsi un espace avant (G) entre la calandre avant (2) et le pare-brise avant (4), la cabine de conducteur (3) comprenant en outre :
- une section latérale de cabine (5) munie d'une porte (6) montée de manière articulée sur la cabine du conducteur (3) ;
- une section de coin avant de cabine (7) sur un côté de la calandre avant (2), la section de coin avant de cabine (7) s'étendant de la calandre avant (2) à la porte (6) ;
- un ensemble de couverture (19) positionné entre la calandre avant (2) et le pare-brise avant (4) pour couvrir l'espace avant (G) ; **caractérisé en ce que** la cabine de conduite (3) comprend une paroi pare-feu (8) positionnée dans une direction verticale sous le pare-brise avant (4) et positionnée à une distance derrière la calandre avant (2) vue dans la direction de déplacement normale (M) du véhicule ; et **en ce que** l'ensemble de couverture (19) comprend un élément de couverture en forme de V (9) présentant une première jambe d'élément de couverture (11) et une seconde jambe d'élément de couverture (12) fixée de manière intégrale à la première jambe d'élément de couverture (11), la première jambe d'élément de couverture (11) présentant une extrémité de jambe d'élément de couverture libre (11A) montée sur la paroi pare-feu (8), l'élément de couverture en forme de V (9) présentant une section centrale (9C) dans laquelle la première jambe d'élément de couverture (11) s'étend à partir de la paroi pare-feu (8) dans une direction sensiblement horizontale vers une extrémité de calandre avant de première jambe d'élément de couverture (11B) agencée à proximité de la calandre avant (2), et section centrale (9C) dans laquelle la seconde jambe d'élément de couverture (12) s'étend vers l'arrière dans la direction de déplacement normale (M) du véhicule à partir de la calandre avant (2) dans une direction vers le haut en direction du pare-brise avant (4), la seconde jambe d'élément de couverture (12) et la première jambe d'élément de couverture (11) formant un angle (AN) d'au plus 50°.

2. Véhicule à moteur (1) selon la revendication 1, dans lequel l'angle (AN) présente une valeur comprise entre 25° et 45°.

3. Véhicule à moteur (1) selon la revendication 1 ou 2, dans lequel l'ensemble de couverture (19) comprend un premier joint d'étanchéité (14) s'étendant entre l'extrémité de calandre avant de première jambe d'élément de couverture (11B) et la calandre avant (2), le premier joint d'étanchéité (14) venant en prise avec la calandre avant (2), et dans lequel l'ensemble de couverture (19) comprend un second joint d'étanchéité (13) s'étendant entre une extrémité libre de la seconde jambe d'élément de couverture (12) et le pare-brise avant (4), le second joint d'étanchéité (13) venant en prise avec le pare-brise avant (4).

4. Véhicule à moteur (1) selon l'une quelconque des revendications précédentes, dans lequel la calandre avant (2) est fixée de manière rotative à la cabine de conducteur (3) sur un axe de charnière de calandre avant (H), l'axe de charnière de calandre avant (H) s'étendant horizontalement et transversalement à la direction de déplacement normale (M) du véhicule, dans lequel l'axe de charnière de calandre avant (H) est agencé près d'une extrémité supérieure de la calandre avant (2).

5. Véhicule à moteur (1) selon l'une quelconque des revendications précédentes, dans lequel la seconde jambe d'élément de couverture (12) présente une surface supérieure (12U), la surface supérieure (12U) de la seconde jambe d'élément de couverture (12) présente une première zone de surface (12U1) positionnée de manière adjacente à la calandre avant (2) et une seconde zone de surface (12U2) positionnée de manière adjacente au pare-brise avant (4), la seconde zone de surface (12U2) étant surélevée par rapport à la première zone de surface (12U1), dans lequel une transition de la première zone de surface (12U1) à la seconde zone de surface (12U2) est formée par un gradin en forme de cale (T).

6. Véhicule à moteur (1) selon la revendication 3 ou l'une quelconque des revendications 4 ou 5 lorsqu'elles dépendent de la revendication 3, dans lequel le pare-brise avant (4) comprend une section latérale de pare-brise incurvée (4S), la section latérale de pare-brise incurvée (4S) s'étendant au-dessus de la section de coin avant de cabine (7) et à une certaine distance de la section de coin avant de cabine (7) en définissant ainsi un espace de coin (CG), dans lequel l'élément de couverture en forme de V (9) comprend une section latérale incurvée (9S) couvrant l'espace de coin (CG), et dans lequel, au niveau de la section latérale incurvée (9S) de l'élément de couverture en forme de V (9), la première jambe d'élément de couverture (11) présente une extrémité de section de coin avant de cabine de première jambe d'élément de couverture agencée près de la section de coin avant de cabine (7), dans lequel, au niveau de la section latérale incurvée (9S) de l'élément de couverture en forme de V (9), le premier joint d'étanchéité (14) s'étend entre l'extrémité de section de coin avant de cabine de première jambe d'élément de couverture et la section de coin avant de cabine (7), le premier joint d'étanchéité (14) venant en prise avec la section de coin avant de cabine (7), dans lequel, au niveau de la section latérale incurvée (9S) de l'élément de couverture en forme de V (9), la seconde jambe d'élément de couverture (12) s'étend depuis la section de coin avant de cabine (7) dans une direction vers le haut en direction de la section latérale de pare-brise incurvée (4S), et dans lequel au niveau de la section latérale incurvée (9S) de l'élément de couverture en forme de V (9), le second joint d'étanchéité (13) s'étend entre une extrémité libre de la seconde jambe d'élément de couverture (12) et la section latérale de pare-brise incurvée (4S), le second joint d'étanchéité (13) venant en prise avec la section latérale de pare-brise incurvée (4S).

7. Véhicule automobile (1) selon la revendication 5 ou la revendication 6 lorsqu'elle dépend de la revendication 5, dans lequel l'élément de couverture en forme de V (9) présente une section intermédiaire entre la section latérale incurvée (9S) de l'élément de couverture en forme de V (9) et la section centrale (9C) de l'élément de couverture en forme de V (9), dans lequel dans la section intermédiaire de l'élément de couverture en forme de V (9), le gradin en forme de cale (T) entre la première zone de surface (12U1) et la seconde zone de surface (12U2) est positionnée plus près du pare-brise avant (4) que de la calandre avant (2), et dans lequel à la fois dans la section latérale incurvée (9S) de l'élément de couverture en forme de V (9) et la section centrale (9C) de l'élément de couverture en forme de V (9), le gradin en forme de cale (T) entre la première zone de surface (12U1) et la seconde zone de surface (12U2) est positionné plus près de la section de coin avant de cabine (7) et de la calandre avant (2), respectivement, que du pare-brise avant (4).
